# EUROPEAN PATENT APPLICATION

(11) **EP 4 481 901 A1**
(43) Date of publication of application: **25.12.2024**
(21) Application number: 23305981.5
(22) Date of filing: 21.06.2023
(51) Int. Cl.: H01M 50/103, H01M 50/119, H01M 50/121, H01M 50/124, H01M 50/15, H01M 50/159, H01M 50/55, H01M 50/553

(54) **METHOD FOR DEPOSITING AN ELECTRICAL INSULATION LAYER**

(71) Applicant: Automotive Cells Company SE, 33520 Bruges (FR)
(72) Inventor: VILLARDI, Caroline, BRUGES (FR); AGRET, Alain, BRUGES (FR); SINGH, Laura, BRUGES (FR)
(74) Representative: Alatis

(57) **Abstract**

The invention relates to a method for depositing an electrical insulation layer (1) on an electrochemical cell (2) comprising a lower wall, a side wall (4) and an upper wall (5) on which a positive terminal (6) and a negative terminal (7) are arranged, the side wall (4) and the upper wall (5) being connected by a peripheral edge (8). The deposition method comprises a step of depositing an electrical insulation layer (1) during which the electrical insulation layer (1) is deposited on the lower wall, the side wall (4), and only on one border (9) of the upper wall (5), the border (9) extending from the peripheral edge (8) toward the interior of the upper wall (5) over a distance d, so as to form an electrical insulation strip (14) covering the border and surrounding a central zone (10) of the upper wall.

## Description

### TECHNICAL FIELD OF THE INVENTION

The invention generally relates to the technical field of energy storage devices, and in particular to a method for depositing an electrical insulation layer on an electrochemical cell.

Electrochemical cells are used in electric or hybrid vehicles, i.e., those which move at least partially by electrical energy, for example.

### PRIOR ART

Motor vehicles with electric or hybrid traction or propulsion comprise one or more battery modules connected to a power network for powering an electric (traction or propulsion) motor.

The battery modules are grouped together in a casing and then form a battery pack, this casing generally containing a mounting interface and connection terminals.

Each battery module comprises at least one electrochemical cell generating current by chemical reaction, for example of the lithium-ion (or Li-ion) type, or of the Ni-Mh, or Ni-Cd or lead type.

An electrochemical cell comprises, in particular, a stack of positive electrodes connected to one another and a stack of negative electrodes connected to each other, separated by a separator, known as a "stack". The positive electrodes connected to one another form a positive terminal, and the negative electrodes connected to each other form a negative terminal.

It is known to assemble, in series and/or in parallel, a plurality of electrochemical cells in order to produce the battery modules using an interconnection device ensuring an electrical contact between the terminals of two neighboring electrochemical cells.

Each electrochemical cell is housed in a metal housing. The housing is generally made of aluminum. Once the assembly of electrochemical cells is integrated into the housing, a plate forming a cover is laser-welded to the housing to produce the structural connection and the sealing of the electrochemical cell.

Lithium-ion electrochemical cells must be electrically isolated during use to ensure the safety and reliability of the electrochemical cell and the battery pack.

Currently, electrical insulation is implemented after the process of assembling the electrochemical cells, by bonding an electrically insulating film, made of polyethylene terephthalate (PET), for example, onto the surface of the housing. This film can be bonded after the operation of welding the cover to the housing, because it is bonded at ambient temperature and does not cause the temperature of the electrochemical cell to rise in a way that could damage it, unlike deposition techniques carried out at high temperatures.

However, the insulating film is easily scratched or damaged by external substances or hard particles, for example, during production or operation. Additionally, sometimes the film comes detached from the housing with time, which leads to failure of the electrical insulation and affects the safety performance of the electrochemical cells.

To overcome these problems, document EP3944354 proposes an electrochemical cell comprising walls covered by a polymer layer ensuring dielectric insulation. The insulating film-forming resin may be obtained by photocuring a prepolymer. The surface of the electrochemical cell is not entirely covered with polymer to leave a strip between an upper edge and the rest of a side wall. The edge is not covered with polymer in order to be able to weld the cover to the housing. After the weld, an electrically insulating film is bonded to the edge not covered with polymer and on the cover.

Alternatively, there are methods in which a second operation for depositing insulating materials is carried out on the welded zones, after the welding operation. This operation requires a subsequent step of masking with adhesive strips.

However, these methods of the prior art are complex and take long to implement because they comprise a multitude of steps such as at least two insulation steps.

### DISCLOSURE OF THE INVENTION

The invention aims to remedy all or some of the drawbacks of the prior art by proposing in particular a method for depositing an electrical insulation layer on an electrochemical cell making it possible to simplify and accelerate the manufacture of the electrochemical cell, while guaranteeing excellent electrical insulation of the edge and upper corners of the electrochemical cell.

To do this, according to a first aspect of the invention, a method for depositing an electrical insulation layer on an electrochemical cell comprising a lower wall, a side wall and an upper wall on which a positive terminal and a negative terminal are arranged is proposed. The side wall and the upper wall are connected by a peripheral edge.

The deposition method comprises a step of depositing an electrical insulation layer during which the electrical insulation layer is deposited on the lower wall, the side wall and only on one border of the upper wall. The border extends from the peripheral edge toward the interior of the upper wall over a distance d, so as to form an electrical insulation strip covering the border and surrounding a central zone of the upper wall.

The invention thus provides a method for depositing an electrical insulation layer on an electrochemical cell making it possible to manufacture the electrochemical cell that is simpler and faster, since it requires fewer steps, while guaranteeing excellent electrical insulation of the upper edge and upper corners of the electrochemical cell.

The upper edge and the upper corners are perfectly covered by the electrical insulation layer owing to the strip of electrical insulator which extends from the upper edge and toward the inside of the upper wall of the electrochemical cell.

According to one embodiment, the distance d is greater than 0.5 mm, preferably greater than 2 mm and/or less than 6 mm, preferably less than 4 mm.

This distance makes it possible to perfectly cover the upper edge and the upper corners of the electrochemical cell, without covering the terminals.

According to another embodiment, the deposition method comprises, before the step of depositing the electrical insulation layer, a step of masking a central zone of the upper wall. The central zone is delimited by the border and comprises the positive and negative terminals.

According to another embodiment, a masking device is positioned facing the central zone during the masking step, the masking device comprising a masking face in which a counter-form of the central zone of the electrochemical cell is formed.

Unlike the methods of the prior art using a deposition method by application of insulating material and ultraviolet drying, the method of the invention only comprises a single deposition step thanks to the masking. It is not necessary to proceed with a first deposition, then to a welding step between the housing and the upper part followed by a second deposition. It is not necessary to use an adhesive to mask zones that are not to be covered, as applying and removing the adhesive takes time.

According to another embodiment, the electrochemical cell is positioned above the masking device during the masking step. The masking device is positioned on a horizontal support.

In this way, during the step of depositing an electrical insulation layer, all the walls are accessible to receive an electrical insulation deposition except the central zone of the upper wall that forms a masked zone.

According to another embodiment, a space e is formed between the central zone of the electrochemical cell and the masking face of the masking device.

The space e prevents the formation of a film of insulating material that would bond the electrochemical cell to the masking device.

According to another embodiment, the positive and negative terminals of the electrochemical cell rest on the recesses of the masking device so that the masking face is not in contact with the central zone.

This provides simple means for supporting the electrochemical cell and masking the central zone.

According to another embodiment, the step of depositing an electrical insulation layer comprises covering the lower wall, the side wall, and the border of the upper wall of the electrochemical cell with a layer of liquid electrical insulation, then hardening the layer of liquid electrical insulation by means of an ultraviolet crosslinking method.

The ultraviolet crosslinking method makes it possible to not use a thermal curing process and avoid thus having to heat the cells which may produce irreversible damages to its electrochemistry. Indeed, the UV lamps producing the UV light needed to crosslink are emitting quite a lot of infrared lights so the surface of the cell will reach a temperature of 50-70°C for some tens of seconds to a few minutes.

This deposition method makes it possible to obtain a strong adhesion of the insulating layer to the walls of the electrochemical cell, the upper edge, and the upper corners formed by weld lines, even after several years. There is no appearance of blisters over time, and the weld lines are perfectly covered in a single deposition step.

According to another aspect of the invention, it relates to an electrochemical cell obtained by the deposition method defined above.

The electrochemical cell comprises a lower wall, a side wall, and an upper wall on which a positive terminal and a negative terminal are arranged. The side wall and the upper wall are connected by a peripheral edge. The bottom wall and the side wall are covered by an electrical insulation layer. The electrical insulation layer extends over one border of the upper wall from the peripheral edge and toward the inside of the upper wall over a distance d, forming an electrical insulation strip covering the border and surrounding a central zone of the upper wall.

According to one embodiment, the distance d is greater than 0.5 mm, preferably greater than 2 mm and/or less than 6 mm, preferably less than 4 mm.

According to another embodiment, the electrical insulation strip surrounds the positive and negative terminals.

According to another embodiment, the electrical insulation layer has a thickness suitable to provide an electric insulation.

The electrochemical cell obtained has the abovementioned advantages.

According to another aspect of the invention, the latter relates to a masking device intended to mask an upper wall of an electrochemical cell during a method for depositing an electrical insulation layer as defined above.

The masking device comprises a masking face intended to be positioned facing a central zone of an upper wall of the electrochemical cell. The masking face has a perimeter smaller than that of the central zone so that the masking face is offset from the peripheral edge of the upper wall of the electrochemical cell by a distance d over its entire perimeter.

According to an embodiment, the masking device has a parallelepiped shape with a width l1 less than the width l2 of the upper wall of the electrochemical cell so that l1 = l2 - 2d. The masking device has a length L1 less than the length L2 of the upper wall of the electrochemical cell so that L1 = L2 - 2d.

According to another embodiment, the masking face forms a counter-form of the central zone of the upper wall of the electrochemical cell.

The masking device makes it possible to produce a method for depositing an electrical insulation layer on an electrochemical cell in a single step, allowing the production of the electrochemical cell to be simpler and faster, while guaranteeing excellent electrical insulation of the upper edge of the electrochemical cell.

### BRIEF DESCRIPTION OF THE FIGURES

Other features and advantages of the invention will become apparent on reading the following description, with reference to the appended figures, which show:
- Figure 1: a schematic view of an electrochemical cell before it is covered by an insulating material layer;
- Figure 2: a schematic view of a masking device according to one embodiment of the invention;
- Figure 3: a schematic view of the masking device of Figure 2 supporting the electrochemical cell of Figure 1 during a masking step;
- Figure 4: a detailed schematic view of the masking device supporting the electrochemical cell;
- Figure 5: a schematic view of the electrochemical cell of Figure 1 after it has been covered with a layer of insulating material, according to one embodiment of the invention;
- Figure 6: a schematic top view of the electrochemical cell of Figure 5;
- Figure 7: a detailed photograph of an upper corner of the electrochemical cell of Figure 5.

For greater clarity, identical or similar elements are identified by identical reference signs in all of the Figures.

### DETAILED DESCRIPTION OF AN EMBODIMENT

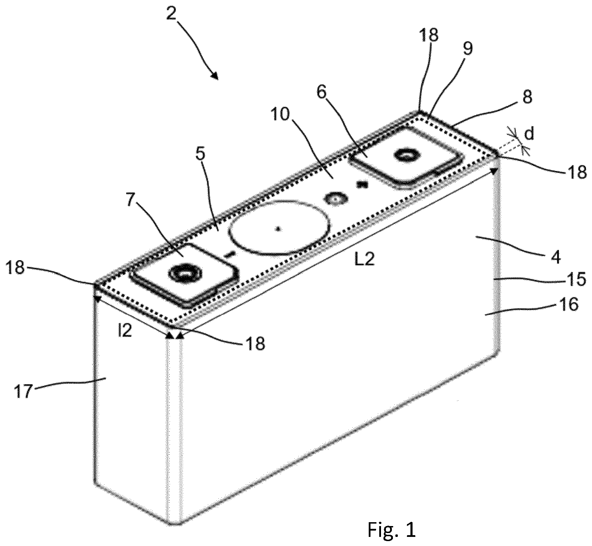

The invention relates to an electrochemical cell **2**, as shown in Figure 1, which can be used, for example, in an electric or hybrid vehicle, i.e., one which moves at least partially by electrical energy, for example.

An electrochemical cell **2** comprises, in particular, a stack of positive electrodes connected to one another and a stack of negative electrodes connected to each other, separated by a separator, known as a "stack". The positive electrodes connected to one another form a positive terminal, and the negative electrodes connected to each other form a negative terminal.

It is known to assemble, in series and/or in parallel, a plurality of electrochemical cells **2** in order to produce battery modules using an interconnection device ensuring an electrical contact between the terminals of two neighboring electrochemical cells **2**.

In order to mechanically assemble the electrically connected electrochemical cells **2**, it is known to align them on a flat support or a rail and keep them at the two ends compressed by fixed parallel plates, such an assembly being designated by the term "module".

A plurality of modules are grouped together in a casing and then form a battery pack, this casing generally containing a mounting interface and connection terminals.

Each electrochemical cell **2** is accommodated in a metal housing **15** which is generally made of aluminum. Once the assembly of electrochemical cells is integrated into the package **15**, an upper wall **5**, being in the form of a plate, is laser-welded to the housing **15**, for example, to produce the structural connection and the sealing of the electrochemical cell **2**.

The electrochemical cell **2** has a parallelepipedal shape of rectangular cross-section and comprises a lower wall **3** and a side wall **4**. The upper wall **5** comprises a positive terminal **6** and a negative terminal **7**. The side wall **4** and upper wall **5** are connected by a peripheral edge **8**, of rectangular shape. More specifically, the side wall **4** is perpendicular to the upper wall **5**.

The upper wall **5** is opposite and parallel to the lower wall **3**. The side wall **4** comprises two first faces **16** parallel to each other and two second faces **17** parallel to each other and being as tall as the first faces **16** but a less wide than the first faces **16**.

The electrochemical cell **2** is obtained during a manufacturing step comprising a step of assembling the electrochemical cell **2** wherein the upper wall **5** is welded to the housing **15**, as described above.

The peripheral edge **8** is in the form of a ridge formed by a weld line due to the junction by welding between the faces **16**, **17** of the side wall **4** and upper wall **5**. The peripheral edge **8** has a rounded shape.

The electrochemical cell **2** further comprises four upper corners **18** with a rounded shape, each formed by welding.

The method for manufacturing the electrochemical cell **2** comprises a method for depositing an electrical insulation layer **1** onto an electrochemical cell **2** as described below.

The deposition method comprises a deposition step during which the electrical insulation layer **1** is deposited on the bottom wall **3**, the side wall **4** and only on one border **9** of the upper wall **5**. The border **9** extends from the peripheral edge **8** toward the interior the upper wall **5** over a distance **d**.

The distance **d** corresponds to the width of the border **9**. The distance **d** is greater than 0.5 mm, preferably greater than 2 mm and/or less than 6 mm, preferably less than 4 mm.

The deposition method comprises, before the step of depositing the electrical insulation layer, a step of masking the central zone **10** of the upper wall **5**.

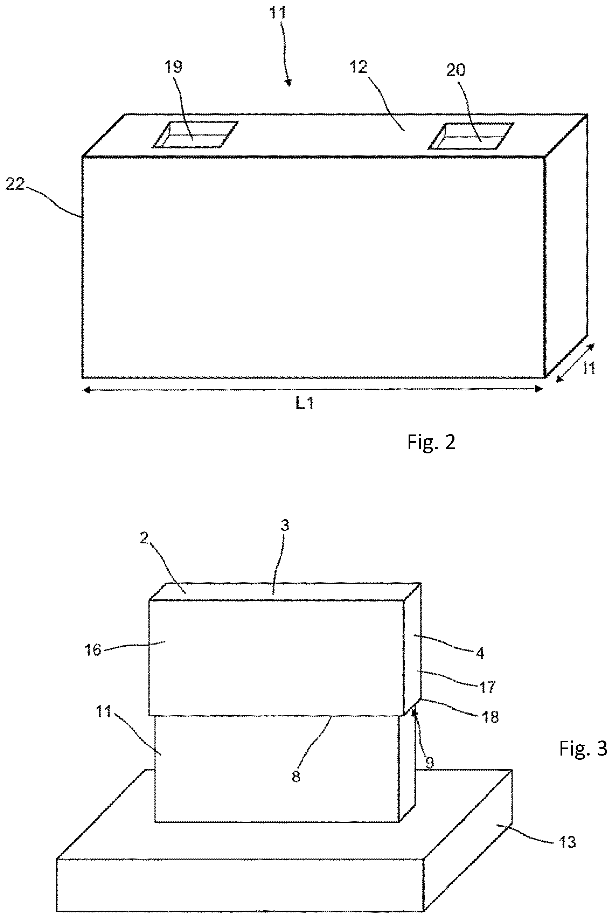

During the masking step, a masking device **11**, as shown in Figure **2**, is positioned opposite the central zone **10**, as shown in Figure **3**.

The masking device **11** comprises a masking face **12** wherein a counter-form of the central zone **10** is of the upper wall **5** of the electrochemical cell **2** is formed. The masking face **12** is positioned opposite the central zone **10** and the mask entirely.

The masking face **12** comprises a first recess **19** wherein the positive terminal **6** of the electrochemical cell **2** is accommodated when the masking device **11** is positioned opposite the central zone **10** of the upper wall **5** of the electrochemical cell **2** and a second recess **20** wherein the negative terminal **7** of the electrochemical cell **2** is accommodated. The recesses **19**, **20** have a shape complementary to that of the terminals **6**, **7**.

In the example of figures 1 to 3, the positive and negative terminals **6**, **7** and recesses **19**, **20** have a parallelepiped shape.

As a variant, the positive and negative terminals **6**, **7** and recesses **19**,**20** may have a cylindrical shape.

The masking face **12** has a perimeter smaller than that of the central zone **10** so that the masking face **12** is offset from the peripheral edge **8** of the upper wall **5** of the electrochemical cell **2** by the distance d over its entire periphery.

The masking face **12** is supported by a box **22**.

In the example of Figures 2 and 3, the masking device **11** has a parallelepiped shape with a width **l1** less than the width **l2** of the upper wall **5** of the electrochemical cell **2** so that **l1** = **l2**- **2d**. The masking device **11** has a length **L1** less than the length **L2** of the upper wall **5** of the electrochemical cell **2** such that **L1** = **L2** - **2d**, where **d** is equal to the width of the border **9**.

For example, the upper wall **5** may have a width **l2** of 45.61 mm and a length **L2** of 177.44 mm. The height of the electrochemical cell **2** is 98.54 mm.

In this case, if the distance **d** is equal to 3 mm, the border width **9** is 3 mm, the width **l1** of the masking device **11** is 39.61 mm and the length **L1** of the masking device**11** is 92.54 mm.

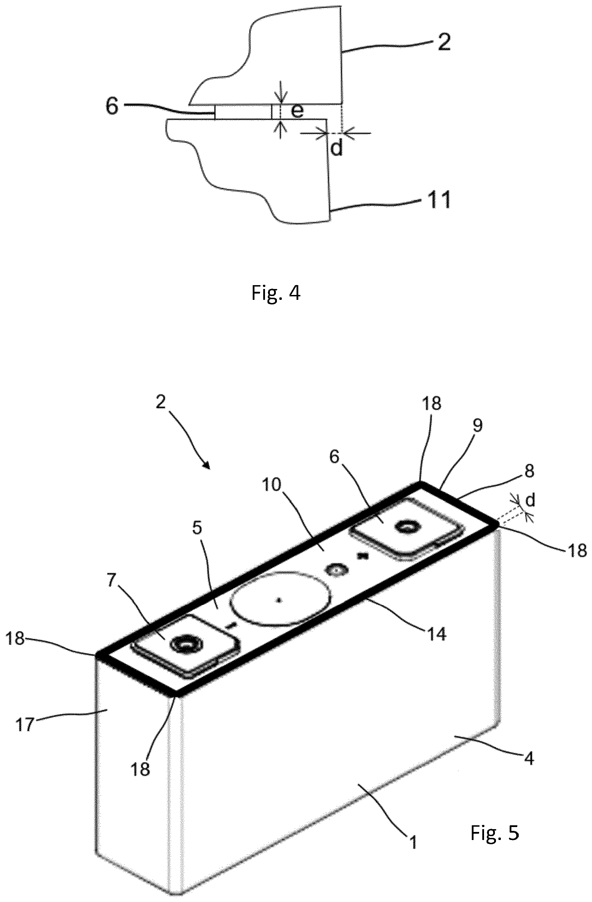

Advantageously, as illustrated in Figures 3 and 4, the electrochemical cell **2** is positioned above the masking device **11** during the masking step, the masking device **11** being positioned on a horizontal support **13** such as a table for example.

Preferably, a space **e** is formed between the central zone **10** of the electrochemical cell **2** and the masking face **12** of the masking device **11** to avoid the formation of a film of insulating material bonding the electrochemical cell **2** to the masking device **11**.

The space **e** is greater than or equal to 200 µm, preferably greater than or equal to 0.5 mm and/or less than or equal to 5 mm, preferably less than or equal to 2 mm.

To obtain this space **e**, the positive and negative terminals **6**, **7** rest on the recesses **19**, **20** such that the masking face **12** of the masking device **11** is not in contact with the central zone **10** of the electrochemical cell **2**.

The depth of the recesses **19**, **20** is less than the height of the positive and negative terminals **6**, **7**.

In this way, during the step of depositing an electrical insulation layer **1**, all the walls **3**, **4** are accessible to receive an electrical insulation deposition except the central zone **10** of the upper wall **5** which is masked. The border **9** of the upper wall **5** is the only accessible surface of the upper wall **5** for receiving the deposition of electrical insulation.

The step of depositing an electrical insulation layer **1** comprises covering the lower wall **3**, side wall **4** and border **9** of the upper wall **5** of the electrochemical cell **2** by a layer of liquid electrical insulation. The layer of liquid electrical insulation may be painted or sprayed onto the walls.

The crosslinking of the layer of liquid electrical insulation is carried out by exposure to an appropriate ultraviolet radiation so only an acceptable low level of heat is provided to the cell and therefore no damage is made to the electrochemical cell **2**. The temperature of the layer is below 70°C and preferably below 60°C.

Preferably, the liquid electrical insulation material is a coating that crosslinks to provide the required properties under an appropriate ultraviolet light exposure.

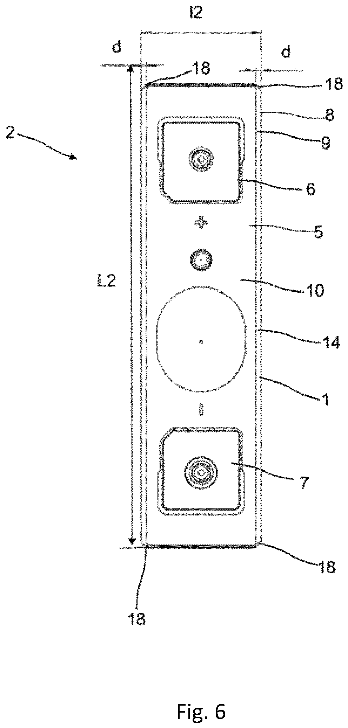

After the deposition of the electrical insulation layer **1**, the lower wall **3**, the side wall **4** and the border **9** of the upper wall **5** are entirely covered with the layer of electrical insulator **1**, as shown in the Figures **5** and **6**.

The upper wall **5** is partially covered by the electrical insulation layer **1**. The electrical insulation layer **1** extends on the border **9** of the upper wall **5** from the peripheral edge **8** and towards the inside of the upper wall **5** over distance **d**, so as to form an electrical insulation strip **14** border **9** and surrounding a central zone **10** of the upper wall **5**.

The border **9** is entirely covered by the electrical insulation strip **14**. Preferably, the border **9** and the electrical insulation strip **14** are continuous and completely surround the central zone **10** of the upper wall **5** and therefore positive and negative terminals **6**, **7** which are positioned in the central zone **10**.

The border **9** and the electrical insulation strip **14** have a rectangular shape. The border **9** and the electrical insulation strip **14** have a width equal to **d**. This width is preferably regular.

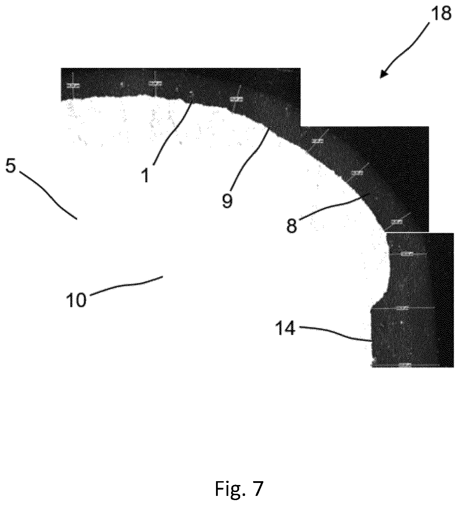

The electrical insulation layer **1** is deposited during a single deposition step and forms a continuous layer on the lower wall **3**, the side wall **4** and border **9** of the upper wall **5**, so as to perfectly cover the peripheral edge **8** and upper corners **18** of the electrochemical cell **2**, as shown in Figure 7.

The electrical insulation layer **1** has a thickness suitable to provide an electric insulation and can be applied in one, two, or three layers. The total film thickness is deposited in two or three layers with a partial crosslinking under ultraviolet light between two layers and a full crosslinking under ultraviolet light for the last layer. In case of a recoat to repair a damaged cell, the same process must be applied.

Figure 7 shows a photograph of an upper corner **18** of the electrochemical cell **2** showing that the upper corner **18** and border **9** of the upper wall **5** of the electrochemical cell **2** are perfectly covered by the electrical insulation layer **1**.

The upper corner **18** has a rounded shape due to the weld which is perfectly covered by the electrical insulation layer **1**.

Alternatively, the electrochemical cell **2** and masking device **11** may have other shapes such as a cylindrical shape, for example. The lower wall **3** and upper wall **5** then have a circular cross-section. The side wall **4** and upper wall **5** are connected by a peripheral edge **8**, of circular shape. The border **9** and the electrical insulation strip **14** are also circular.

Of course, the invention is described in the foregoing by way of example. It is understood that a person skilled in the art is able to produce different variant embodiments of the invention without departing from the scope of the invention.

It is emphasized that all of the features, as they are taught to the person skilled in the art from the present disclosure, drawings and attached claims, even though specifically they have been described in relation to other determined features, both individually and in any combinations, may be combined with other features or feature groups disclosed herein, as long as not expressly excluded and no technical circumstances make such combinations impossible or nonsensical.

## Claims

1. A method for depositing an electrical insulation layer (1) on an electrochemical cell (2) comprising a lower wall (3), a side wall (4) and an upper wall (5) on which a positive terminal (6) and a negative terminal (7) are arranged, the side wall (4) and the upper wall (5) being connected by a peripheral edge (8), **characterized in that** it comprises a step of depositing an electrical insulation layer (1) during which the electrical insulation layer (1) is deposited on the lower wall (3), the side wall (4) and only on one border (9) of the upper wall (5), the border (9) extending from the peripheral edge (8) towards the inside of the upper wall (5) over a distance d, so as to form an electrical insulation strip (14) covering the border (9) and surrounding a central zone (10) of the upper wall (5).

2. The deposition method according to claim 1, wherein the distance d is greater than 0.5 mm, preferably greater than 2 mm and/or less than 6 mm, preferably less than 4 mm.

3. The deposition method according to any one of claims 1 or 2, **characterized in that** it comprises, before the step of depositing the electrical insulation layer, a step of masking a central zone (10) of the upper wall (5), the central zone (10) being delimited by the border (9) and comprising the positive and negative terminals (6, 7).

4. The deposition method according to claim 3, **characterized in that** a masking device (11) is positioned facing the central zone (10) during the masking step, the masking device (11) comprising a masking face (12) in which a counter-form of the central zone (10) of the electrochemical cell is formed.

5. The deposition method according to claim 4, **characterized in that** the electrochemical cell (2) is positioned above the masking device (11) during the masking step, the masking device (11) being positioned on a horizontal support (13).

6. The deposition method according to any one of claims 4 or 5, **characterized in that** a space e is formed between the central zone (10) of the electrochemical cell (2) and the masking face (12) of the masking device (11).

7. The deposition method according to claim 6, wherein the positive and negative terminals (6, 7) of the electrochemical cell (2) rest on the recesses (19, 20) of the masking device (11) so that the masking face (12) is not in contact with the central zone (10).

8. The deposition method according to any one of claims 1 to 7, **characterized in that** the step of depositing an electrical insulation layer (1) comprises covering the lower wall (3), the side wall (4) and the border (9) of the upper wall (5) of the electrochemical cell (2) with a layer of liquid electrical insulation, then hardening the layer of liquid electrical insulation by a method of crosslinking by ultraviolet.

9. The electrochemical cell (2) obtained by the deposition method defined according to any one of claims 1 to 8, the electrochemical cell (2) comprising a lower wall (3), a side wall (4) and an upper wall (5) on which a positive terminal (6) and a negative terminal (7) are arranged, the side wall (4) and the upper wall (5) being connected by a peripheral edge (8), the lower wall (3) and the side wall (4) being covered by an electrical insulation layer (1), **characterized in that** the electrical insulation layer (1) extends over one border (9) of the upper wall (5) from the peripheral edge (8) and towards the interior of the upper wall (5) over a distance d, forming an electrical insulation strip (14) covering the border (9) and surrounding a central zone (10) of the upper wall (5).

10. An electrochemical cell (2) according to claim 9, **characterized in that** the distance d is greater than 0.5 mm, preferably greater than 2 mm and/or less than 6 mm, preferably less than 4 mm.

11. An electrochemical cell (2) according to any one of claims 9 or 10, **characterized in that** the electrical insulation strip (14) surrounds the positive and negative terminals (6, 7).

12. An electrochemical cell (2) according to any one of claims 9 to 11, **characterized in that** the electrical insulation layer (1) has a thickness suitable to provide an electric insulation.

13. A masking device (11) intended to mask an upper wall (5) of an electrochemical cell (2) during a method for depositing an electrical insulation layer (1) as defined according to any one of claims 1 to 8, **characterized in that** it comprises a masking face (12) intended to be positioned facing a central zone (10) of an upper wall (5) of the electrochemical cell (2), the masking face (12) having a perimeter smaller than that of the central zone (10) such that the masking face (12) is offset from the peripheral edge (8) of the upper wall (5) of the electrochemical cell (2) by a distance d over its entire perimeter.

14. The masking device (11) according to claim 13, **characterized in that** it has a parallelepipedal shape with a width l1 less than the width l2 of the upper wall (5) of the electrochemical cell (2) such that l1 = l2 - 2d, the masking device (11) having a length L1 less than the length L2 of the upper wall (5) of the electrochemical cell (2) such that L1 = L2 - 2d.

15. The masking device (11) according to any one of claims 13 or 14, wherein the masking face (12) forms a counter-form of the central zone (10) of the upper wall (5) of the electrochemical cell (2).

## Amended claims

### Amended claims in accordance with Rule 137(2) EPC.

1. A method for depositing an electrical insulation layer (1) on an electrochemical cell (2) comprising a lower wall (3), a side wall (4) and an upper wall (5) on which a positive terminal (6) and a negative terminal (7) are arranged, the side wall (4) and the upper wall (5) being connected by a peripheral edge (8), the deposition method comprising a step of depositing an electrical insulation layer (1) during which the electrical insulation layer (1) is deposited on the lower wall (3), the side wall (4) and only on one border (9) of the upper wall (5), the border (9) extending from the peripheral edge (8) towards the inside of the upper wall (5) over a distance d, so as to form an electrical insulation strip (14) covering the border (9) and surrounding a central zone (10) of the upper wall (5), the deposition method being **characterized in that**:
- the step of depositing an electrical insulation layer (1) comprises covering the lower wall (3), the side wall (4) and the border (9) of the upper wall (5) of the electrochemical cell (2) by a layer of liquid electrical insulation; and
- before the step of depositing the electrical insulation layer, a step of masking a central zone (10) of the upper wall (5), the central zone (10) being delimited by the border (9) and comprising the positive and negative terminals (6, 7), a masking device (11) being positioned facing the central zone (10) during the masking step, the masking device (11) comprising a masking face (12) in which a counter-form of the central zone (10) of the electrochemical cell is formed, the masking face (12) having a perimeter smaller than that of the central zone (10) so that the masking face (12) is offset from the peripheral edge (8) of the upper wall (5) of the electrochemical cell (2) by the distance d over its entire periphery.

2. The deposition method according to claim 1, wherein the distance d is greater than 0.5 mm, preferably greater than 2 mm and/or less than 6 mm, preferably less than 4 mm.

3. The deposition method according to claim 1 or 2, **characterized in that** the electrochemical cell (2) is positioned above the masking device (11) during the masking step, the masking device (11) being positioned on a horizontal support (13).

4. The deposition method according to any one of claims 1 to 3, **characterized in that** a space e is formed between the central zone (10) of the electrochemical cell (2) and the masking face (12) of the masking device (11).

5. The deposition method according to claim 4, wherein the positive and negative terminals (6, 7) of the electrochemical cell (2) rest on the recesses (19, 20) of the masking device (11) so that the masking face (12) is not in contact with the central zone (10).

6. The deposition method according to any one of claims 1 to 5, **characterized in that** the step of depositing an electrical insulation layer (1) comprises covering the lower wall (3), the side wall (4) and the border (9) of the upper wall (5) of the electrochemical cell (2) with a layer of liquid electrical insulation, then hardening the layer of liquid electrical insulation by a method of crosslinking by ultraviolet.

7. An electrochemical cell (2) obtained by the deposition method defined according to any one of claims 1 to 6, the electrochemical cell (2) comprising a lower wall (3), a side wall (4) and an upper wall (5) on which a positive terminal (6) and a negative terminal (7) are arranged, the side wall (4) and the upper wall (5) being connected by a peripheral edge (8), the lower wall (3) and the side wall (4) being covered by an electrical insulation layer (1), **characterized in that** the electrical insulation layer (1) extends over one border (9) of the upper wall (5) from the peripheral edge (8) and towards the interior of the upper wall (5) over a distance d, forming an electrical insulation strip (14) covering the border (9) and surrounding a central zone (10) of the upper wall (5).

8. The electrochemical cell (2) according to claim 7, **characterized in that** the distance d is greater than 0.5 mm, preferably greater than 2 mm and/or less than 6 mm, preferably less than 4 mm.

9. The electrochemical cell (2) according to any one of claims 7 or 8, **characterized in that** the electrical insulation strip (14) surrounds the positive and negative terminals (6, 7).

10. The electrochemical cell (2) according to any one of claims 7 to 9, **characterized in that** the electrical insulation layer (1) has a thickness suitable to provide an electric insulation.

11. A masking device (11) intended to mask an upper wall (5) of an electrochemical cell (2) during a method for depositing an electrical insulation layer (1) as defined according to any one of claims 1 to 6, **characterized in that** it comprises a masking face (12) intended to be positioned facing a central zone (10) of an upper wall (5) of the electrochemical cell (2), the masking face (12) having a perimeter smaller than that of the central zone (10) such that the masking face (12) is offset from the peripheral edge (8) of the upper wall (5) of the electrochemical cell (2) by a distance d over its entire perimeter.

12. The masking device (11) according to claim 11, **characterized in that** it has a parallelepipedal shape with a width 11 less than the width 12 of the upper wall (5) of the electrochemical cell (2) such that 11 = 12 - 2d, the masking device (11) having a length L1 less than the length L2 of the upper wall (5) of the electrochemical cell (2) such that L1 = L2 - 2d.

13. The masking device (11) according to any one of claims 11 or 12, wherein the masking face (12) forms a counter-form of the central zone (10) of the upper wall (5) of the electrochemical cell (2).
